# EUROPEAN PATENT SPECIFICATION

(11) **EP 2 728 052 B1**
(45) Date of publication and mention of the grant of the patent: **14.12.2016**
(21) Application number: 12190644.0
(22) Date of filing: 30.10.2012
(51) Int. Cl.: D06F 39/00, D06F 39/04, D06F 39/08

(54) **Washing machine**
Waschmaschine
Machine à laver

(43) Date of publication of application: 07.05.2014
(73) Proprietor: Electrolux Home Products Corporation N.V., 1130 Brussels (BE)
(72) Inventor: Cavarretta, Francesco, 33080 Porcia (PN) (IT); Vignocchi, Massimiliano, 33080 Porcia (PN) (IT)
(74) Representative: Electrolux Group Patents

(56) References cited:
- EP-A1- 2 096 203
- EP-A1- 2 224 049
- EP-A1- 2 385 169
- WO-A1-2009/123458
- WO-A1-2011/080045
- DE-A1-102004 023 126

## Description

The present invention relates to a washing machine for washing goods as, for example, a dish washing machine or a laundry washing machine.

In the present application the washing machine can be a washing machine or a washing-drying machine (i.e. a washing machine which can both wash and dry the goods).

In a washing machine, it is known to use an electric heater to heat water in a washing chamber.

In order to save energy consumption, it is also known to use a heat pump in place of or besides the electric heater for heating the water.

EP 2 096 203 A1 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced. To prevent or reduce any deposition or sedimentation of dirt from the waste water in the container, means for agitating or pumping the waste water may be provided in the container, such as a circulation pump by which water is removed at one location of the container and fed to another location again.

The washing machine of EP 2 096 203 A1 may be further provided with an evaporator disposed in the heat pump, in thermal contact with an electronics unit, the power part of which generates a relatively large amount of heat, and used for heating the process water. This evaporator can be part of the afore-mentioned evaporator or a separate evaporator, with a branch or a switching valve. It can have its own expansion valve located upstream that can be specially adapted to the evaporator in regard to flow and temperature.

The Applicant observes that the heat exchange at the further evaporator depends on the usage of the power part of the electronics unit and cannot be controlled. Moreover, by being connected in parallel with the heat pump evaporator, it is believed to have uncontrolled impacts on the performance of the heat pump evaporator.

EP 2 224 049 A1 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 A2 discloses a household appliance comprising a tub, a tank filled with liquid and a heat pump for extracting heat from the liquid contained in the tank and supplying the heat to the tub. The tank is a closed tank whose content is not changed within the framework of the normal process carried out by the household appliance. EP 2 206 824 A2 states that a heat exchanger can be provided between a waste water line and the tank in order to transfer heat from the waste water into the liquid tank and that in addition to this, other types of waste heat of the appliance can also be supplied to the liquid in the tank, for example the tank can also be coupled to an electrical consumer by means of a passive heat exchanger, a ventilation device or a heat pump. In order to improve the heat exchange, means for agitating or pumping the liquid can be further be provided on the tank.

During operation of the heat pump, the liquid in the tank is cooled down with respect to a starting temperature and, optionally, at least partially iced. The cooled/iced liquid needs to be regenerated, that is warmed up again towards the starting temperature, in order to be used again for a next, optionally immediately subsequent, process cycle. In case of ice generation, it is preferable that all the ice is melted before the next process cycle is started.

The Applicant observes that in EP 2 206 824 A2, the heat exchanger between the waste water line or additional waste heat source and the tank can only be used for such purpose of regenerating the liquid in the tank, but is not effective and actually unable to heat the liquid in the tank during the main process when the heat pump is operated to heat the process water.

WO 2011/080045 discloses a heat pump laundry dryer comprising an additional heat exchanger, the first side thereof is arranged between the condenser and the expansion device. The second side of the additional heat exchanger is arranged between the evaporator and the compressor. Furthermore, the laundry drier has a further additional heat exchanger havinf a first side arranged in the heat pump circuit between the additional heat exchanger and the compressor and the second side can have air flowing through it.

It is an object of the invention to provide an alternative washing machine with a heat pump.

It is a further object of the invention to provide a washing machine with a heat pump with enhanced performance.

It is another object of the invention to provide an improved washing machine with a heat pump that has improved design and construction.

The Applicant found that the above objects are achieved in a washing machine according to claim 1.

With those provisions, as will be clearer hereinafter, the length of the path of the heat transfer fluid within the second heat exchanger -used as an evaporator- need not be oversized, still ensuring that all the heat transfer fluid completes evaporation upstream of the compressor and thus still preserving the compressor safety.

Thus, according to the present invention, the heat pump efficiency is increased and the compressor safety is preserved. In addition, the size of the evaporator and thus of the tank can be reduced, thereby improving the design and construction of the washing machine.

The heat supplied to the heat transfer fluid in such additional heat exchanger allows at least part of the superheating phase of the heat transfer fluid to take place within such additional heat exchanger instead of within the second heat exchanger used as evaporator in the heat pump. It is even possible to complete evaporation of the heat transfer fluid in the additional heat exchanger, before superheating it.

In the present description and attached claims, under "superheating" the heating of the heat transfer fluid when it is already in the vapour state, to increase its temperature beyond the saturation temperature at a given pressure, is meant.

The strict requirements of guaranteeing complete evaporation within the evaporator and thus the need of providing a high degree of superheating within evaporator are therefore relaxed. The evaporator only needs to be designed to allow evaporation of the heat transfer fluid, possibly with just a few degrees of superheating, or even just to almost complete evaporation. Even a very small percentage of liquid in the second heat exchanger, what happens when evaporation is just almost completed therein, benefits of a better thermal exchange than the vapour, thus increasing the performance of the heat pump. With the above provisions, the evaporation temperature of the heat transfer fluid may be closer to - still being lower than- the solidification temperature of the liquid within the tank, improving the performance of the heat pump.

In addition, the evaporator may be made with a shorter path for the heat transfer fluid, and thus smaller than if the additional heat exchanger were not provided for.

According to the invention, the additional heat exchanger is a fluid to air heat exchanger, which is connected into a portion of the heat pump circuit between the outlet of the second heat exchanger and the inlet of the compressor.

A controllable fan is associated with the fluid to air heat exchanger, so as to increase its efficiency by conveying thereonto ambient air, or the air within the cabinet, heated by the compressor, the motor, and any electronic device within washing machine, and at the same time avoiding overheating of those components.

The additional heat exchanger is advantageously so designed as to superheat the heat transfer fluid and possibly to complete evaporation of the heat transfer fluid before superheating.

The pressure lowering device may be a capillary tube.

Such a capillary tube is advantageously so designed as to have the second heat exchanger completely flooded, i.e. so that there is liquid and evaporation takes place along the entire length of the evaporator, without there being any superheating phase, or there being only a part of the superheating phase. Thus, even near the outlet of the second heat exchanger there is still a small percentage of liquid inside the second heat exchanger, what increases the performance of the heat pump.

In another embodiment, the pressure lowering device comprises a controllable valve, and the washing machine comprises a control unit configured to control the controllable valve and/or the controllable fan, so as to control the released heat, based on one or more of the following:
a) the temperature of the heat transfer fluid at the inlet of the (LPS of the) additional heat exchanger, namely at the outlet of the second heat exchanger,
b) the temperature of the heat transfer fluid at the outlet of the (LPS of the) additional heat exchanger, namely at the inlet of compressor,
c) the difference of temperature of the heat transfer fluid across the second heat exchanger,
d) the difference of temperature of the heat transfer fluid across the (LPS of the) additional heat exchanger, namely between the inlet of the compressor and the outlet of the second heat exchanger, and
e) the difference of temperature between the liquid in tank and the heat transfer fluid at the outlet of the second heat exchanger.

The Applicant also found that the above objects are achieved, in a washing machine comprising a chamber for receiving goods to be washed and a heat pump associated with a liquid tank, by providing controllable heat to the contents of the liquid tank.

In an embodiment, a liquid circulation conduit is associated to the tank, and an additional, fluid to air heat exchanger is connected into such conduit, a controllable fan being associated with said additional heat exchanger.

Advantageously, the liquid circulation conduit is provided with a pump, and the pump and/or the controllable fan are operated during operation of the heat pump.

Thus, the average temperature of the liquid within tank is increased, and the storing capacity of the tank is increased and/or the percentage of solidified liquid - ice in the case of water - is reduced, thus increasing the performance of the heat pump because the latent heat during icing can be exploited without however allowing too much ice to accumulate on the evaporator.

Advantageously, the liquid circulation conduit allows the heating transfer to also continue after the end of the heat pump operation, to speed up the regeneration of the liquid within tank, in order to be available again as energy source for the heat pump in a next, optionally immediately subsequent, washing cycle.

In the washing machine according to the invention, the liquid tank may be a closed tank whose content is not changed within the framework of the normal process carried out by the washing machine, or may be an open tank connected to the washing chamber to receive waste water.

Advantageously, similarly to the washing machine of European patent application 12178490.4 still secret at the date of first filing of the present application, the liquid tank is an open tank directly fluidly connected to the water mains, that is by means of a conduit that bypasses the chamber, what enables to regenerate cooled/iced liquid in the tank by replacement with clean tap water also during operation of the heat pump, and not only at the end of a process cycle of the washing mashine by using waste water coming from said process cycle.

The second heat exchanger is advantageously thermally coupled to the tank.

In an embodiment, the second heat exchanger can be arranged within the tank.

In a preferred embodiment, the first heat exchanger comprises a tube arrangement adapted to deliver heat.

In a preferred embodiment, the second heat exchanger comprises a tube arrangement adapted to aborb heat.

In an embodiment, the heat transfer fluid is a refrigerant adapted to condense inside the first heat exchanger and to evaporate inside the second heat exchanger.

In this embodiment, the first heat exchanger is a condenser and the second heat exchanger is an evaporator.

In another embodiment, the heat transfer fluid can be a refrigerant that operates non-conventional cycles, as for instance carbon dioxide, that does not undergo a phase change (i.e., condensation and evaporation) in the first heat exchanger and second heat exchanger.

The heat transfer fluid is advantageously circulated through said circuit.

Suitably, said circuit is a closed recirculation circuit.

The first heat exchanger is advantageously thermally coupled to the water to be used in the chamber.

In an embodiment, the first heat exchanger is thermally coupled to the chamber. For example, the first heat exchanger can be arranged inside the chamber, preferably on the bottom of the chamber.

In another embodiment, the first heat exchanger is thermally coupled to a water circuit conducting the water into the chamber.

In an embodiment, the water circuit is a recirculation circuit adapted to drain water from the chamber and to return it back into the chamber at another location. Suitably, the recirculation circuit comprises a pump and a pipe arrangement. In this embodiment, the first heat exchanger can be thermally connected to the pump and/or the pipe arrangement. This solution enables to recirculate the water through the recirculation circuit, which is thermally coupled to the first heat exchanger, till a desired process temperature is reached.

In another embodiment, the first heat exchanger is thermally coupled to a water circuit adapted to draw water directly from the water mains, bypassing the chamber, and to deliver it into the chamber (without recirculation). In this embodiment, the tap water from water mains is heated by the first heat exchanger before entering the chamber. The first heat exchanger thus operates only on contact with tap water.

Advantageously, the tank has an input fluidly connected to the water mains by means of said conduit.

Suitably, the washing machine comprises a water outlet circuit for discharging waste water (i.e. used water) from the chamber. The water outlet circuit is advantageously fluidly connected to the bottom of the chamber.

The water outlet circuit can comprise a draining pump and draining pipes, adapted for discharging waste water from the chamber after process cycles (e.g. washing, rinsing cycles).

Advantageously, the tank has an output for draining away at least part of cooled liquid from the tank.

Advantageously, the output of the tank is fluidly connected to the water outlet circuit in order to drain away at least part of cooled liquid from the tank via the water outlet circuit.

According to another embodiment, the output of the tank is fluidly connected to a dedicated liquid outlet circuit (that is to a liquid outlet circuit free of fluid connection with the water outlet circuit).

According to an embodiment, the tank is thermally coupled to the water outlet circuit (e.g. to said draining pump and/or to said draining pipes). This advantageously enables to transfer heat from the waste water flowing through the water outlet circuit to the liquid contained in the tank thereby improving regeneration of the cooled/iced liquid in the tank. The thermal coupling can be achieved, for example, by means of a heat exchanger, as for example by placing the draining pipes in contact with the tank.

As said, the washing machine suitably comprises a control unit. The control unit is advantageously configured in order to control operation of the washing machine.

The control unit is advantageously configured to i.a. manage regeneration of the liquid in the tank, cooled/iced during operation of the heat pump. Suitably, the control unit is configured to manage entry of tap water from the water mains into the tank and exit of at least part of the liquid cooled by the second heat exchanger. This, with the purpose of melting any ice formation in the tank and at least partially replacing cooled liquid in the tank with tap water at a higher temperature.

In addition or in alternative, the control unit can be configured to manage cooled/iced liquid regeneration in the tank so that cooled/iced liquid regeneration is performed when the heat pump is switched off.

In a preferred embodiment, the control unit is configured to operate the heat pump so that the liquid in the tank is at least partially freezed. In this way, the latent heat of the phase transition from liquid to solid is advantageously used and the heat pump efficiency is improved.

The washing machine can be a dish washing machine or a laundry washing machine.

According to an embodiment, the washing machine can be a washing-drying machine for both washing and drying goods.

Features and advantages of the present invention will be more readily understood from the following detailed description of some preferred embodiments thereof, which is provided below by way of non-limiting example with reference to the accompanying drawings, wherein:
- figure 1 generically represents a washing machine wherein the additional heat exchanger and the controllable fan of Figure 2 are not shown invention;
- figure 2 schematically shows a detail of the washing machine of the present invention.

Like elements are denoted by like reference signs throughout the figures.

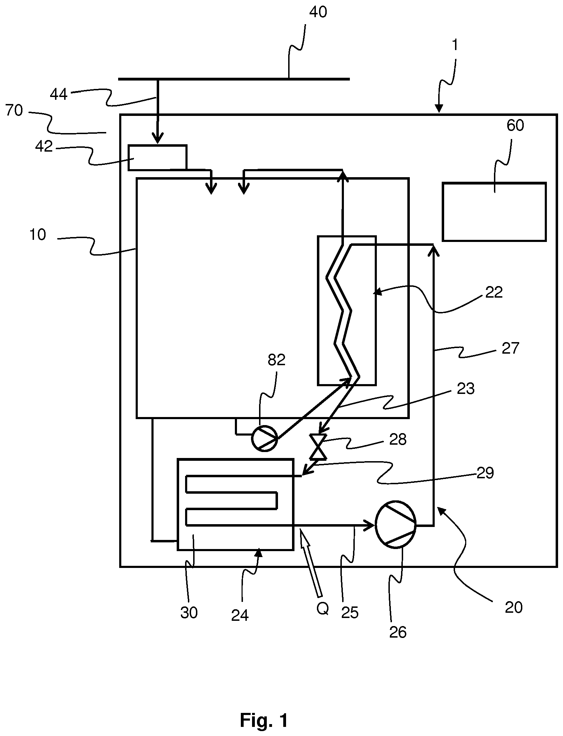

Figure 1 shows a heat pump washing machine 1, comprising a chamber 10 for treating goods, a tank 30 adapted to contain a liquid, and a heat pump 20 adapted to absorb heat from the liquid contained in the tank 30 and to heat water to be used in the chamber 10, also referred to as process water hereinafter.

The washing machine also comprises a water outlet circuit (not shown) for discharging waste water (i.e. used water optionally mixed with washing products) from the chamber 10 after process cycles (e.g., washing, rinsing cycles).

The water outlet circuit can comprise a draining pump and draining pipes.

The water outlet circuit is advantageously fluidly connected to the bottom of the chamber 10.

The tank 30 can be thermally coupled to the water outlet circuit in order to transfer heat from waste water flowing through the pipes into the liquid contained in the tank 30 for regeneration thereof. For example, thermal coupling can be achieved by placing the draining pipes in contact with the tank 30.

The washing machine 1 advantageously further comprises a water inlet circuit 70 (only diagrammatically shown) adapted to supply water, that can be optionally mixed with washing products, into the chamber 10. The water inlet circuit 70 advantageously comprises a drawer 42 and water inlet pipes 44.

The water inlet pipes 44 fluidly connect water mains 40 to the chamber 10 via the drawer 42.

The drawer 42 is adapted to be filled with products, for example detersives, softener, bleaching, sparkling/rinse aid substances, etc. The drawer 42 can comprise one or more compartments (not shown) for one or more products from which a certain amount of these products, depending on the washing program, is delivered into the chamber 10.

The tank 30 can be a closed tank 30 whose content is not changed within the framework of the normal process carried out by the washing machine.

In one alternative, the tank 30 can have an input which is directly fluidly connected to public water mains 40 in order to be able to directly receive tap water from it bypassing the chamber 10 (that is without making the tap water to pass through the chamber 10).

In another alternative, the tank 30 can have an input which is in fluid connection with waste water from the chamber 10.

In still another alternative, the tank 30 can have an input that may be selectively, such as through an electrovalve, put in fluid connection with water mains 40 and with waste water from the chamber 10.

In the alternatives above, the tank 30 has an output fluidly connected to the water outlet circuit in order to drain away cooled/iced liquid from the tank 30 via the water outlet circuit. The output and the water outlet circuit are suitably connected through pipes.

The liquid contained in the tank 30 advantageously is tap water and/or waste process water, possibly mixed with the above mentioned products.

When the tank is a closed tank 30, the liquid contained in the tank 30 can differ from water and be, for example, glycol, which has the advantage of a low freezing point.

Alternatively, the liquid contained in the tank 30 can comprise a carrier liquid and a frost protection agent that reduces the freezing point of the mixture compared with the freezing point of the pure carrier liquid. In this way, cooling to lower temperatures can be accomplished while heat is delivered to heat pump 20, either to just above or to or below the freezing point.

As another alternative, the liquid contained in the tank 30 can comprise a carrier liquid and a freezing-point-increasing agent, that increases the freezing point of the mixture compared with the pure carrier liquid and thus works in more convenient thermodynamics conditions.

The tank 30 is advantageously positioned on a bottom region of the washing machine 1.

The amount of liquid contained in the tank 30 and the volume of the tank 30 depend on the amount of water that must be heated up during a process cycle of the washing machine 1, the temperature required for the water, and the percentage of frozen liquid in the tank 30.

As explained in more detail below, according to the invention, the heat pump efficiency is improved and ice formation in the tank 30 is reduced so that the size of the tank 30 can be reduced compared with prior art washing machines.

As shown in figure 1, the heat pump 20 suitably comprises a heat exchanger used as a condenser 22, a heat exchanger used as an evaporator 24, a compressor 26 and a pressure lowering device or lamination means 28, such as an expansion valve that may be a thermostatic or electronic valve, or a capillary tube.

The condenser 22, the evaporator 24, the compressor 26 and the pressure lowering device 28 form as a whole a closed circuit or conduit filled with a heat transfer fluid, such as a refrigerant. During operation of the heat pump 20 (that is, when the compressor 26 is switched-on), heat is generated at the condenser 22, i.e. released to the process water, and cold is generated at the evaporator 24, i.e. heat is subtracted from the liquid within tank 30.

The heat transfer fluid is pumped from the compressor 26, usually trough a connecting pipe 27, to the condenser 22, where liquefaction takes place accompanied by release of heat. The released heat is used to warm water to be used in the chamber 10. From the condenser 22 the heat transfer fluid passes, usually trough a connecting pipe 23 and via the pressure lowering device 28, and usually trough a connecting pipe 29, to the evaporator 24 where the heat transfer fluid evaporates whilst absorbing heat from the liquid contained in the tank 30. From the evaporator 24 the heat transfer fluid runs back, usually trough a connecting pipe 25, to the compressor 26.

The evaporator 24 can comprise a pipe or a series of pipes properly shaped and immersed in the liquid contained in the tank 30.

The heat transfer fluid of the heat pump 20 is properly selected so as to have an evaporation temperature below the solidification point of the liquid within tank 30. In the case of water being contained in tank 30, having an icing point of 0°C, the evaporation temperature of the heat transfer fluid should be lower than 0°C, as better detailed hereinafter.

Thus, within evaporator 24, the heat transfer fluid recovers thermal energy from the tank 30 cooling down and icing the water or other liquid contained thereinto. The thermal energy is transferred to the washing water via condenser 22.

Considering that during operation of the heat pump 20, ice (if any) is inclined to build up around the evaporator 24, if the tank 30 is not a closed tank then its input and output are preferably positioned sufficiently far apart from the evaporator 24 so as to prevent any obstruction of the input and output due to ice formation.

The condenser 22 can be located within the chamber 10, preferably on a bottom region, or outside the chamber 10.

The condenser 22 is advantageously arranged so as to be able to heat the water to be used in the chamber 10.

The condenser 22 can be a tube-in-tube heat exchanger, a plate heat exchanger or similar fluid to fluid heat exchanger. The water to be used in the chamber 10 is made to flow through the condenser 22 so that it exhanges energy with the heat transfer fluid or refrigerant by forced convection.

The water can be continuously recirculated by a pump 82 through the condenser 22 and back to the chamber 10 until the desired temperature is reached. Water is preferably drained from the chamber 10 from the bottom and returned back into the chamber 10 at another location, preferably at an upper location via the condenser 22.

The condenser 22 may be positioned inside the chamber 10.

Alternatively, tap water can be heated directly, by flowing through the condenser 22, before entering into the chamber 10. In this case, pump 82 and pipes (not shown) are adapted to directly drain tap water from the water mains 40 bypassing the chamber 10, to conduct the tap water through the condenser 22 and then into the chamber 10, without recirculation. In this embodiment, the condenser 22 operates without being in contact with waste water.

The washing machine suitably comprises a control unit 60 configured to control operation of the washing machine 1.

When the washing machine 1 is turned on in order to perform a predetermined washing program, the control unit 60 is advantageously configured to switch the heat pump 20 on any time water has to be heated for use in the chamber 10 in order to perform a process cycle (e.g., washing, rinsing, and similar) of the predetermined washing program.

The control unit 60 is also advantageously configured to switch the heat pump 20 off when the process water reaches a desired process temperature or when the liquid in the tank reaches a predetermined condition (for example, when it is in large part iced).

The liquid in the tank 30 exchanges sensible heat during a cooling phase of the liquid and latent heat during an icing phase (if any). The exploitation of the latent heat allows reducing the amount of liquid required and therefore the overall dimensions of the tank 30. Accordingly, the control unit 60 is advantageously configured to operate the heat pump 20 so that the liquid in the tank 30 is at least partially freezed.

Depending on the program design, heat pump power, and wash temperature, the heat pump 20 alone might be insufficient to heat up the water to the desired process temperature in the available time. Therefore, a conventional electrical heater (not shown) may be comprised in the washing machine 1 as well. The conventional electrical heater can be suitably positioned on the bottom of the chamber 10.

In a heat pump washing machine 1 as disclosed thus far, in order to guarantee that the desired process temperature is reached for the desired amount of process water, the heat exchanger 22 and the flow rate of the process water thereinto should be suitably sized. The heat transfer fluid flowing within heat pump 20 should be capable of releasing the proper amount of heat at the heat exchanger 22.

The heat transfer fluid flowing within heat pump 20 should therefore be capable of receiving a proper amount of heat in the remainder of the heat pump circuit. Complete evaporation of the heat transfer fluid should also be ensured in order to safeguard the compressor 26 from damages that would possibly be caused if liquid particles of heat transfer fluid entered thereinto.

According to the present invention, these aims are attained by supplying heat Q upstream of the compressor 26, more specifically between the outlet of the pressure lowering device 28 and the inlet of the compressor 26, thus at the evaporator 24 or at the portion of the heat transfer fluid circuit connecting its outlet to the compressor 26.

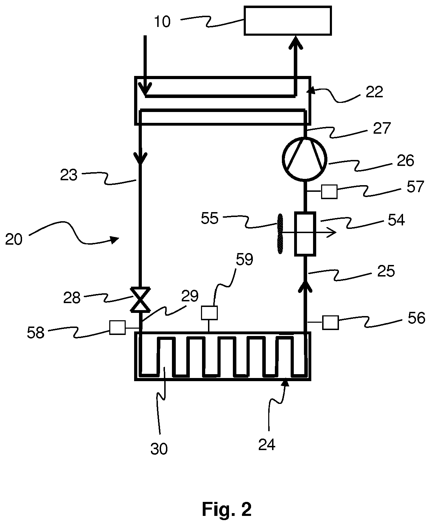

As disclosed in more detail hereinafter, the heat Q is directly supplied to the heat transfer fluid in an additional heat exchanger (heat exchanger 54 in FIG. 2) connected in the portion of the heat transfer fluid circuit (pipe 25) between the evaporator 24 and the compressor 26 of the heat pump 20.

As said, in order to safeguard the compressor 26, complete evaporation of the heat transfer fluid upstream thereof should be ensured. To this aim, the heat transfer fluid would conventionally be so selected as to have an evaporation temperature well below the solidification temperature of the liquid within tank 30, such as 5°C to 10°C below the solidification temperature of the liquid within tank 30, and/or the length of the path within evaporator 24 would conventionally be so selected that the heat transfer fluid is totally evaporated and superheated within evaporator 24. In case water is contained within tank 30, having an icing temperature of 0°C, the heat transfer fluid would conventionally be selected as one having an evaporation temperature between -5°C and -10°C.

A lower evaporation temperature and thus a lower temperature of the heat transfer fluid at the outlet of the evaporator 24 decreases however the heat pump efficiency and the heat amount that can be transferred from the tank 30 to the process water. In fact, the lower the evaporation temperature, the lower is the evaporation pressure and thus the lower are the density of the heat transfer fluid and, the compressor being equal, the heat transfer fluid mass flow rate, so that the lower are the heating and cooling powers of the heat pump 20.

A longer path within evaporator 24 disadvantageously requires more of the limited space that is available within the washing machine 1.

The heat Q supplied to the heat transfer fluid in the additional heat exchanger 54 connected in the portion of the heat transfer fluid circuit (pipe 25) between the evaporator 24 and the compressor 26 of the heat pump 20 advantageously allows at least part of the superheating phase of the heat transfer fluid -and possibly even part of the evaporation thereof- to take place within such additional heat exchanger 54 instead of within evaporator 24 as in the known washing machines.

The strict requirements of guaranteeing complete evaporation within the evaporator 24 and thus the need of providing a high degree of superheating within evaporator 24 are therefore relaxed. The evaporator 24 only needs to be designed to allow evaporation -or even just almost complete evaporation - of the heat transfer fluid, possibly with just a few degrees of superheating. Even a very small percentage of liquid in the evaporator 24, what happens when evaporation is just almost completed therein (completely flooded evaporator 24), benefits of a better thermal exchange than the vapour, thus increasing the performance of the heat pump 20.

With the above provisions, the evaporation temperature of the heat transfer fluid may thus be closer to -still being lower than- the solidification temperature of the liquid within tank 30, improving the performance of the heat pump 20.

In addition, the evaporator 24 may be made with a shorter path and thus smaller than if the additional heat exchanger 54 were not provided for.

According to the present invention, as diagrammatically shown in FIG. 2, the additional heat exchanger that directly supplies the heat Q to the heat transfer fluid is a fluid to air heat exchanger 54.

The fluid to air heat exchanger 54 is connected in the portion of the heat pump conduit (pipe 25) between the outlet of the evaporator 24 and the inlet of the compressor 26 of the heat pump 20, to provide heat thereto from ambient air, or from the air within the cabinet of the washing machine 1. The additional heat exchanger is connected in series with and downstream of the evaporator 24.

A controllable fan 55 is associated with additional heat exchanger 54.

It is noted that the air within the cabinet is usually even higher than ambient temperature because the compressor 26, a motor rotating a drum within washing chamber 10, the drum itself, where hot process water flows or is contained, and electronic components of the washing machine 1, release heat. On the other hand, as seen above the heat transfer fluid at the input of such additional heat exchanger 54, i.e. at the outlet of evaporator 24, has an average temperature lower than the solidification or icing temperature of the liquid within tank 30.

The additional heat exchanger 54 accordingly transfers heat from the air within the cabinet to heat transfer fluid flowing within the above said portion of its circuit (pipe 25), heating up -and if necessary first completing evaporation of- the heat transfer fluid just leaving the evaporator 24 before it enters the compressor 26. At the same time, overheating of the compressor 26, the motor, and any electronic device within washing machine 1 is advantagously avoided.

The pressure lowering device or lamination means 28 may be a capillary tube, preferably designed in order to have the evaporator 24 completely flooded, i.e. so that there is liquid and evaporation takes place along the entire length of the evaporator 24, without there being any superheating phase, or there being only a part of the superheating phase (few degrees). Even part of the evaporation can be delegated to the additional heat exchanger 54. Thus, even near the outlet of the evaporator 24 there is still a small percentage of liquid inside the evaporator 24 itself, what as said increases the performance of the heat pump 20.

In case of an active lamination means 28, e.g. when the pressure lowering device 28 comprises a controllable valve, this can be controlled by control unit 60 based on -e.g. so as to keep to a preselected value or within a preselected range- one or more of the following temperatures and differences of temperature, that may be estimated or averaged or measured runtime through temperature sensors as diagrammatically shown in FIG. 2:
a) the temperature Ta of the heat transfer fluid at the outlet of evaporator 24, namely at the inlet of the additional heat exchanger 54 (sensor 56),
b) the temperature Tb of the heat transfer fluid at the inlet of compressor 26, namely at the outlet of the additional heat exchanger 54 (sensor 57),
c) the difference of temperature Ta-Tc of the heat transfer fluid across the evaporator 24 (sensors 56 and 58),
e) the difference of temperature Ta-Td between the liquid in tank 30 and the heat transfer fluid at the outlet of evaporator 24 (sensors 56 and 59).

The controllable valve of the pressure lowering device 28 can also be controlled based on:
d') the difference of temperature Tb-Ta of the heat transfer fluid across the additional heat exchanger 54 (sensors 56 and 57), i.e. between the inlet of compressor 26 and the outlet of evaporator 24.

The additional heat exchanger 54 should be designed to complete the heating phase, i.e. to provide the suitable superheating. Possibly, it may also be designed so as to complete evaporation before superheating the heat transfer fluid.

Irrespectively of whether the pressure lowering device 28 comprises a controllable valve or not, the fan 55 associated with the additional heat exchanger 54 can advantageously be controlled to control the heat supplied to the heat transfer fluid.

The fan 55 may be controlled by control unit 60 based on - e.g. so as to keep to a preselected value or within a preselected range- one or more of the following temperatures and differences of temperature, that again may be estimated or averaged or measured runtime through temperature sensors as diagrammatically shown in FIG. 2:
a) the temperature Ta of the heat transfer fluid at the outlet of evaporator 24, namely at the inlet of the additional heat exchanger 54 (sensor 56),
b) the temperature Tb of the heat transfer fluid at the inlet of compressor 26, namely at the outlet of the additional heat exchanger 54 (sensor 57),
c) the difference of temperature Ta-Tc of the heat transfer fluid across the evaporator 24 (sensors 56 and 58),
d') the difference of temperature Tb-Ta of the heat transfer fluid across the additional heat exchanger 54 (sensors 56 and 57), i.e. between the inlet of compressor 26 and the outlet of evaporator 24.

Additionally, it might also be controlled based on:
e) the difference of temperature Ta-Td between the liquid in tank 30 and the heat transfer fluid at the outlet of evaporator 24 (sensors 56 and 59).

During operation of the heat pump 20, the liquid in the tank 30 can be moved by a pump or impeller (not shown) in order to increase the heat transfer coefficient.

The control unit 60 is advantageously configured to manage components of the washing machine 1.

In particular, the control unit 60 may be configured to control start/stop of tap water entry from the water mains 40 and start/stop of water exit to the water outlet circuit in order to be used as process water and/or to perform liquid regeneration within tank 30 for further usage as thermal energy source, namely with the purpose of melting any ice formation in the tank 30 and replacing at least part of the cooled liquid with tap water at a higher temperature. Indeed, temperature of "cold" tap water can range from about 15°C to 20°C, depending on the washing machine location (e.g. indoor or outdoor) and on the external ambient temperature. In addition, temperature of hot tap water can range from about 30°C to 50°C.

Starting/stopping tap water entry into the washing machine 1 can be performed by the control unit 60 by opening/closing at least one suitable valve (not shown).

Starting/stopping water exit from the washing machine 1 can be performed by the control unit 60 by opening/closing at least one suitable valve (not shown) and switching on/off a draining pump where provided for.

In the previous description, a number of controls on a number of components of the washing machine have been mentioned. It will be understood that all those controls will be preferably performed by a single control unit, but also two or more control units can be provided. A driver of an electrovalve 28 is to be considered part of such control unit 60.

The washing machine 1 can be a washing machine or a washing-drying machine.

The washing machine 1 can be a dish washer or a laundry washer.

In the case of laundry washer the chamber 10 can be a drum, optionally perforated, which is rotatably contained in a tub (not shown).

Those skilled in the art will understand that several changes, omissions, additions of components may be made to the embodiments disclosed hereinabove without departing from the scope of protection of the present invention as defined by the following claims.

## Claims

1. A washing machine (1) comprising:
- a chamber (10) for receiving goods to be washed,
- a tank (30) adapted to contain a liquid,
- a heat pump (20) comprising a first heat exchanger (22), a second heat exchanger (24), a compressor (26) and a pressure lowering device (28) forming a circuit comprising a heat transfer fluid, the first heat exchanger (22) being adapted to cool said heat transfer fluid and to heat water to be used in the chamber (10), the second heat exchanger (24) being adapted to heat said heat transfer fluid and to cool the liquid contained in the tank (30),
**characterized by** further comprising an additional heat exchanger (54) connected between the outlet of the second heat exchanger (24) and the inlet of the compressor (26) and configured to supply heat to the heat transfer fluid, wherein the additional heat exchanger (54) is a fluid to air heat exchanger (54) and a controllable fan (55) is associated with the additional heat exchanger (54).

2. The washing machine (1) according to claim 1, wherein the additional heat exchanger (54) is so designed as to superheat the heat transfer fluid and possibly to complete evaporation of the heat transfer fluid before superheating.

3. The washing machine (1) according to any of claims 1-2, wherein the pressure lowering device (28) is a capillary tube.

4. The washing machine (1) according to any of claims 1-2, comprising a control unit (60), wherein the pressure lowering device (28) comprises a controllable valve, and the control unit (60) is configured to control the controllable valve based on one or more of the following:
a) the temperature of the heat transfer fluid at the outlet of the second heat exchanger (24),
b) the temperature of the heat transfer fluid at the inlet of compressor (26),
c) the difference of temperature of the heat transfer fluid across the second heat exchanger (24),
d) the difference of temperature of the heat transfer fluid between the inlet of the compressor (26) and the outlet of the second heat exchanger (24),
e) the difference of temperature between the liquid in tank (30) and the heat transfer fluid at the outlet of the second heat exchanger (24).

5. The washing machine (1) according to claim 1, comprising a control unit (60) configured to control the controllable fan (55) based on one or more of the following:
a) the temperature of the heat transfer fluid at the outlet of the second heat exchanger (24) (sensor 56),
b) the temperature of the heat transfer fluid at the inlet of compressor (26),
c) the difference of temperature of the heat transfer fluid across the second heat exchanger (24),
d) the difference of temperature of the heat transfer fluid between the inlet of the compressor (26) and the outlet of the second heat exchanger (24)
e) the difference of temperature between the liquid in tank (30) and the heat transfer fluid at the outlet of the second heat exchanger (24).

6. The washing machine (1) according to any of claims 1-5, further comprising a liquid circulation conduit (62) associated to the tank (30), wherein an additional, fluid to air heat exchanger (66) is connected into such liquid circulation conduit (62), and a controllable fan (68) is associated with said additional heat exchanger (66).

7. The washing machine according to any of claims 1-6, wherein the tank (30) is an open tank directly fluidly connected to the water mains (40), that is by means of a conduit that bypasses the chamber (10).

## Patentansprüche

1. Waschmaschine (1), die Folgendes umfasst:
- eine Kammer (10) zum Aufnehmen von Waschgut,
- einen Behälter (30), der dafür ausgelegt ist, eine Flüssigkeit zu enthalten,
- eine Wärmepumpe (20), die einen ersten Wärmetauscher (22), einen zweiten Wärmetauscher (24), einen Kompressor (26) und eine Druckabsenkvorrichtung (28) umfasst, die einen Kreis bilden, der ein Wärmeübertragungsfluid umfasst, wobei der erste Wärmetauscher (22) dafür ausgelegt ist, das Wärmeübertragungsfluid abzukühlen und in der Kammer (10) zu verwendendes Wasser zu erwärmen, wobei der zweite Wärmetauscher (24) dafür ausgelegt ist, das Wärmeübertragungsfluid zu erwärmen und die in dem Behälter (30) enthaltene Flüssigkeit abzukühlen,
**dadurch gekennzeichnet, dass** die Waschmaschine ferner einen zusätzlichen Wärmetauscher (54) umfasst, der zwischen dem Auslass des zweiten Wärmetauschers (24) und dem Einlass des Kompressors (26) verbunden ist und der dafür konfiguriert ist, dem Wärmeübertragungsfluid Wärme zuzuführen, wobei der zusätzliche Wärmetauscher (54) ein Fluid-zu-Luft-Wärmetauscher (54) ist und wobei dem zusätzlichen Wärmetauscher (54) ein steuerbares Gebläse (55) zugeordnet ist.

2. Waschmaschine (1) nach Anspruch 1, wobei der zusätzliche Wärmetauscher (54) dafür ausgelegt ist, das Wärmeübertragungsfluid zu überhitzen und die Verdampfung des Wärmeübertragungsfluids möglicherweise vor dem Überhitzen abzuschließen.

3. Waschmaschine (1) nach einem der Ansprüche 1-2, wobei die Druckabsenkvorrichtung (28) ein Kapillarrohr ist.

4. Waschmaschine (1) nach einem der Ansprüche 1-2, die eine Steuereinheit (60) umfasst, wobei die Druckabsenkvorrichtung (28) ein steuerbares Ventil umfasst und wobei die Steuereinheit (60) dafür konfiguriert ist, das steuerbare Ventil auf der Grundlage eines oder mehrerer der Folgenden zu steuern:
a) der Temperatur des Wärmeübertragungsfluids bei dem Auslass des zweiten Wärmetauschers (24),
b) der Temperatur des Wärmeübertragungsfluids bei dem Einlass des Kompressors (26),
c) der Temperaturdifferenz des Wärmeübertragungsfluids über den zweiten Wärmetauscher (24),
d) der Temperaturdifferenz des Wärmeübertragungsfluids zwischen dem Einlass des Kompressors (26) und dem Auslass des zweiten Wärmetauschers (24),
e) der Temperaturdifferenz zwischen der Flüssigkeit in dem Behälter (30) und dem Wärmeübertragungsfluid bei dem Auslass des zweiten Wärmetauschers (24).

5. Waschmaschine (1) nach Anspruch 1, die eine Steuereinheit (60) umfasst, die konfiguriert ist, das steuerbare Gebläse (55) auf der Grundlage eines oder mehrerer der Folgenden zu steuern:
a) der Temperatur des Wärmeübertragungsfluids bei dem Auslass des zweiten Wärmetauschers (24) (Sensor 56),
b) der Temperatur des Wärmeübertragungsfluids bei dem Einlass des Kompressors (26),
c) der Temperaturdifferenz des Wärmeübertragungsfluids über den zweiten Wärmetauscher (24),
d) der Temperaturdifferenz des Wärmeübertragungsfluids zwischen dem Einlass des Kompressors (26) und dem Auslass des zweiten Wärmetauschers (24),
e) der Temperaturdifferenz zwischen der Flüssigkeit in dem Behälter (30) und dem Wärmeübertragungsfluid bei dem Auslass des zweiten Wärmetauschers (24).

6. Waschmaschine (1) nach einem der Ansprüche 1-5, die ferner eine dem Behälter (30) zugeordnete Flüssigkeitsumwälzleitung (62) umfasst, wobei in dieser Flüssigkeitsumwälzleitung (62) ein zusätzlicher Wärmetauscher, ein Fluid-zu-Luft-Wärmetauscher (66), verbunden ist und wobei dem zusätzlichen Wärmetauscher (66) ein steuerbares Gebläse (68) zugeordnet ist.

7. Waschmaschine nach einem der Ansprüche 1-6, wobei der Behälter (30) ein offener Behälter ist, der fluidtechnisch direkt, d. h. mittels einer Leitung, die die Kammer (10) umgeht, mit dem Wassernetz (40) verbunden ist.

## Revendications

1. Machine à laver (1) comprenant :
- une chambre (10) pour recevoir les articles à laver,
- un réservoir (30) adapté de façon à contenir un liquide,
- une pompe à chaleur (20) comprenant un premier échangeur de chaleur (22), un deuxième échangeur de chaleur (24), un compresseur (26) et un dispositif abaisseur de pression (28) formant un circuit comprenant un fluide de transfert de chaleur, le premier échangeur de chaleur (22) étant adapté de façon à refroidir ledit fluide de transfert de chaleur et à chauffer de l'eau à utiliser dans la chambre (10), le deuxième échangeur de chaleur (24) étant adapté de façon à chauffer ledit fluide de transfert de chaleur et à refroidir le liquide contenu dans le réservoir (30),
**caractérisée en ce qu'**elle comprend en outre un échangeur de chaleur supplémentaire (54), raccordé entre la sortie du deuxième échangeur de chaleur (24) et l'entrée du compresseur (26) et configuré de façon à fournir de la chaleur au fluide de transfert de chaleur, cet échangeur de chaleur supplémentaire (54) étant un échangeur de chaleur fluide à air (54), et un ventilateur pouvant être commandé (55) étant associé à cet échangeur de chaleur supplémentaire (54).

2. Machine à laver (1) selon la revendication 1, dans laquelle l'échangeur de chaleur supplémentaire (54) est conçu de manière à surchauffer le fluide de transfert de chaleur et éventuellement à achever l'évaporation du fluide de transfert de chaleur avant la surchauffe.

3. Machine à laver (1) selon l'une quelconque des revendications 1 à 2, dans laquelle le dispositif abaisseur de pression (28) est un tube capillaire.

4. Machine à laver (1) selon l'une quelconque des revendications 1 à 2, comprenant une unité de commande (60), dans laquelle le dispositif abaisseur de pression (28) comprend une vanne pouvant être commandée, et l'unité de commande (60) est configurée de façon à commander cette vanne pouvant être commandée en se basant sur un ou plusieurs des paramètres suivants :
a) la température du fluide de transfert de chaleur à la sortie du deuxième échangeur de chaleur (24),
b) la température du fluide de transfert de chaleur à l'entrée du compresseur (26),
c) la différence de température du fluide de transfert de chaleur de part et d'autre du deuxième échangeur de chaleur (24),
d) la différence de température du fluide de transfert de chaleur entre l'entrée du compresseur (26) et la sortie du deuxième échangeur de chaleur (24),
e) la différence de température entre le liquide dans le réservoir (30) et le fluide de transfert de chaleur à la sortie du deuxième échangeur de chaleur (24).

5. Machine à laver (1) selon la revendication 1, comprenant une unité de commande (60) configurée de façon à commander le ventilateur pouvant être commandé (55) en se basant sur un ou plusieurs des paramètres suivants :
a) la température du fluide de transfert de chaleur à la sortie du deuxième échangeur de chaleur (24) (capteur 56),
b) la température du fluide de transfert de chaleur à l'entrée du compresseur (26),
c) la différence de température du fluide de transfert de chaleur de part et d'autre du deuxième échangeur de chaleur (24),
d) la différence de température du fluide de transfert de chaleur entre l'entrée du compresseur (26) et la sortie du deuxième échangeur de chaleur (24),
e) la différence de température entre le liquide dans le réservoir (30) et le fluide de transfert de chaleur à la sortie du deuxième échangeur de chaleur (24).

6. Machine à laver (1) selon l'une quelconque des revendications 1 à 5, comprenant en outre un conduit de circulation de liquide (62) associé au réservoir (30), un échangeur de chaleur fluide à air supplémentaire (66) étant raccordé dans ce conduit de circulation de liquide (62), et un ventilateur pouvant être commandé (68) étant associé audit échangeur de chaleur supplémentaire (66).

7. Machine à laver selon l'une quelconque des revendications 1 à 6, dans laquelle le réservoir (30) est un réservoir ouvert raccordé directement de manière fluidique à la conduite principale d'eau (40), c'est-à-dire au moyen d'un conduit qui contourne la chambre (10).
